# EUROPÄISCHE PATENTSCHRIFT

(11) **EP 1 668 301 B1**
(45) Veröffentlichungstag und Bekanntmachung des Hinweises auf die Patenterteilung: **06.11.2013**
(21) Anmeldenummer: 04765269.8
(22) Anmeldetag: 16.09.2004
(51) Int. Cl.: F27D 11/08

(54) **VERFAHREN ZUR VERBESSERUNG DER HALTBARKEIT VON KOHLENSTOFF- ODER GRAPHITELEKTRODEN DURCH EINSATZ VON TiO sb 2 /sb -HALTIGEN PRODUKTEN**
METHOD FOR IMPROVING THE DURABILITY OF CARBON OR GRAPHITE ELECTRODES BY USING TIO sb 2 /sb -CONTAINING PRODUCTS
PROCEDE POUR AMELIORER LA DURABILITE DE CARBONE OU DE GRAPHITE A L' AIDE DE PRODUITS A BASE DE TIO sb 2 /sb

(30) Priorität: 20.09.2003 DE 10343687
(43) Veröffentlichungstag der Anmeldung: 14.06.2006
(73) Patentinhaber: Sachtleben Chemie GmbH, 47198 Duisburg (DE)
(72) Erfinder: AMIRZADEH-ASL, Djamschid, 47445 Moers (DE); FÜNDERS, Dieter, 47198 Duisburg (DE)
(74) Vertreter: Uppena, Franz
(86) Internationale Anmeldenummer: PCT/EP2004/010367
(87) Internationale Veröffentlichungsnummer: WO 2005/034265

(56) Entgegenhaltungen:
- EP-A- 0 436 143
- DE-A1- 3 327 251
- DE-B- 1 179 493
- US-A- 4 613 375
- US-A- 4 824 733
- US-A- 5 397 450
- DATABASE WPI Section Ch, Week 199432 Derwent Publications Ltd., London, GB; Class L03, AN 1994-261431 XP002322773 & RO 103 719 A (INST CERC METALURGICE BUCURESTI) 30. April 1993 (1993-04-30)
- DATABASE WPI Section EI, Week 198943 Derwent Publications Ltd., London, GB; Class X25, AN 1989-314955 XP002322774 & SE 8 800 005 A (ASEA AB) 5. Juli 1989 (1989-07-05)
- DATABASE WPI Section Ch, Week 198626 Derwent Publications Ltd., London, GB; Class A85, AN 1986-164653 XP002322775 & JP 61 096095 A (NIPPON CARBON CO LTD) 14. Mai 1986 (1986-05-14)

## Beschreibung

Die Erfindung betrifft die Verwendung von Kohlenstoff- oder Graphitelektroden.

In vielen metallurgischen Prozessen (z. B. Elektroofen, Lichtbogenofen) werden Kohlenstoff- oder Graphitelektroden eingesetzt. Der Abbrand dieser Elektroden erfolgt in der Regel über die seitlichen Elektrodenoberflächen. Es wurden bisher zahlreiche Versuche mit dem Ziel unternommen, diesen Seitenabbrand zu reduzieren (= Verringerung der Abbrandgeschwindigkeit). Bekannt ist z. B. die Kühlung der Elektroden.

Bei der Herstellung von Kohlenstoff- und Graphitelektroden werden Kohlenstoffträger (z. B. Aktivkohle, Anthrazit, Petrolkoks oder Mischungen davon) mit einem oder mehreren kohlenwasserstoffhaltigen Bindern vermischt, in die jeweilige Form gegeben und verpresst oder zu Elektrodenrohlingen extrudiert. Je nach Bedarf werden auch noch feinkörnige Eisenoxidträger (z.B. Fe₂O₃) zugegeben, um eventuell vorhanden Schwefel als FeS abzubinden. Anschließend werden die Elektrodenrohlinge in einem Ofen gebrannt. Dabei wandelt sich das Bindemittel ebenfalls in Koks um, und es entsteht eine Elektrode aus Kohlenstoff. Zu weiteren Optimierung der physikalischen Eigenschaften wie Dichte (möglichst hoch), Festigkeit (möglichst hoch) und elektrische Leitfähigkeit (möglichst hoch) kann die Kohlenstoffelektroden z.B. mit Pech imprägniert und ein zweites Mal gebrannt werden. Danach erfolgt die Graphitisierung in einem kontinuierlichen Graphitisierungsofen. Dieser Verfahrensschritt führt zu einer Vergleichmäßigung der Materialeigenschaften innerhalb der Graphitelektrode. Ein weiterer Vorteil dieser Verfahrensweise ist, dass die Penetration von Gas und flüssigen Medien wie Metallen und Schlacken in der fertigen Elektrode reduziert wird. Dies hat neben einer höheren Stabilität der Elektroden auch eine reduzierte Geschwindigkeit des Seitenabbrandes zur Folge.

Aus dem Dokument US-A-4308113 ist ein Verfahren zur Herstellung von verbesserten Graphitelektroden bekannt, welche den Zusatz von Titanverbindungen (TiO₂, TiC, TiB₂) zu Kathoden für die Aluminiumschmelzfluss-Elektrolyse beschreiben. Die Aufgabe gemäß diesem Dokument besteht darin, die Benetzung der Elektroden zu fördern und gleichzeitig den dadurch beschleunigten Verschleiß der Elektroden zu reduzieren. Diese verstärkte Resistenz soll durch die vorgeschlagene Anreicherung der Aschen in den jeweils zum Einsatz gelangenden kohlenstoffhaltigen Rohstoffen an Al₂O₃ und / oder TiO₂ erzeugt werden.

Aufgabe der Erfindung ist es, die Nachteile des Standes der Technik zu überwinden.

Gelöst wird die Aufgabe durch die Verwendung von Kohlenstoff- oder Graphitelektroden, bei denen ein Kohlenstoffträger mit einem kohlenwasserstoffhaltigen Binder vermischt und das Gemisch einem Verkokungs- und/oder Graphitisierungsprozess ausgesetzt wird, wobei den Rohstoffen zusätzlich eine oder mehrere synthetische Titanverbindungen zugegeben werden in Elektro- oder Lichtbogenöfen.

Es wurde gefunden, dass sich in Kohlenstoff- und Graphitelektroden bei ihrem bestimmungsgemäßen Einsatz durch den Zusatz von einer oder mehrerer synthetischer Titanverbindungen hochfeuerfeste Verbindungen wie z. B. Titancarbid, Titannitrid oder Titancarbonitrid bilden, die den Sauerstoffangriff auf die Elektroden hemmen. Weiterhin sind diese Verbindungen sehr resistent gegen den Angriff von flüssigen Metallen oder Schlacken. Dadurch wird die Haltbarkeit der Elektroden verbessert.

Die synthetische Titanverbindung kann dem Kohlenstoffträger, dem Binder oder der Mischung aus Kohlenstoffträger und Binder zugegeben werden. Anschließend wird das Gemisch in die Elektrodenform gegeben und in bekannter Weise weiter behandelt.

Alternativ kann die synthetische Titanverbindung dem Teerpech zugegeben werden. Das mit der synthetischen Titanverbindung versetzte Teerpech wird anschließend in bekannter Weise zum Imprägnieren der Elektroden verwendet. Beim Imprägnierungsprozess diffundiert das Teerpech zusammen mit der Titanverbindung bis zum Kern der Elektroden und füllt dort das offene Porenvolumen aus. Bei der anschließenden thermischen Behandlung des Elektrodenrohlings in einem Brennofen wird das Teerpech wie gewohnt in Koks umgewandelt, wobei die zugesetzten synthetischen Titanverbindungen ebenfalls in dem offenen Porenvolumen verbleiben.

Bevorzugt wird als synthetische Titanverbindung synthetisches TiO₂ eingesetzt. Die synthetische Titanverbindung kann als Reinstoff oder im Gemisch mit anderen anorganischen Stoffen (Begleitstoffe), wie z. B. Eisenoxid, Siliziumoxid, Calciumoxid oder Magnesiumoxid, eingesetzt werden.

Bevorzugt wird die synthetische Titanverbindung in einem Anteil von 0,5 bis 30 Gew.-% (gerechnet ohne eventuelle Begleitstoffe) den Rohstoffen zugesetzt (bezogen auf das Gesamtgewicht aller eingesetzten Rohstoffe), besonders bevorzugt in einem Anteil von 1 bis 15 Gew.-%.

Die synthetische Titanverbindung hat eine bevorzugte Korngröße d₅₀ von 0,001 µm bis 2000 µm, besonders bevorzugt von 0,01 µm bis 1500 µm.

Den Rohstoffen wird bevorzugt zusätzlich zu der synthetischen Titanverbindung Eisenoxid zugegeben, wobei das Eisen unterschiedliche Oxidationsstufen aufweisen kann. Die Zugabemenge des Eisenoxides beträgt bevorzugt bis zu 70 Gew.% der Zugabemenge der synthetischen Titanverbindung, besonders bevorzugt 5 bis 50 Gew.-%. Bevorzugt hat das Eisenoxid eine bevorzugte Korngröße d₅₀ von 0,01 µm bis 2000 µm, besonders bevorzugt von 0,1 bis 1000 µm.

Durch die sich bildenden feuerfesten und feinkörnigen Titanverbindungen (wie z. B. TiC, TiN, TiCN) wird das freie Porenvolumen der Elektroden verringert. Dadurch wird der Angriff von Gasen und flüssigen Medien auf die Matrix der Elektroden in vorteilhafter Weise verringert und die Abbrandgeschwindigkeit der Elektrode verringert. Weiterhin kann sich das verringerte Porenvolumen vorteilhaft auf das Rissbildungsverhalten der Elektroden auswirken. Durch das verringerte Porenvolumen wird die Dichte der Elektroden erhöht, was den spezifischen elektrischen Widerstand der Elektroden vorteilhaft verringert. Bei der bevorzugten Zugabe von Eisenoxid wird eventuell vorhandener Schwefel als FeS abgebunden.

## Patentansprüche

1. Verwendung von Kohlenstoff- oder Graphitelektroden, bei denen ein Kohlenstoffträger mit einem kohlenwasserstoffhaltigen Binder vermischt und
das Gemisch einem Verkokungs- und/oder Graphitisierungsprozess ausgesetzt wird, wobei den Rohstoffen zusätzlich eine oder mehrere synthetische Titanverbindungen zugegeben werden in Elektro- oder
Lichtbogenöfen.

2. Verwendung nach Anspruch 1, **dadurch gekennzeichnet, dass** die synthetische Titanverbindung dem Kohlenstoffträger oder dem Binder oder der Mischung aus Kohlenstoffträger und Binder zugegeben wird.

3. Verwendung nach Anspruch 1, **dadurch gekennzeichnet, dass** die synthetische Titanverbindung zu Teerpech gegeben wird und das mit der synthetischen Titanverbindung versetzte Teerpech anschließend in bekannter Weise zum Imprägnieren der Elektroden verwendet wird.

4. Verwendung nach einem der Anspruche 1 bis 3, **dadurch gekennzeichnet, dass** die synthetische Titanverbindung TiO₂ enthält oder aus TiO₂ besteht.

5. Verwendung nach einem der Ansprüche 1 bis 4, **dadurch gekennzeichnet, dass** die synthetische Titanverbindung im Gemisch mit anderen Stoffen (Begleitstoffe) eingesetzt wird.

6. Verwendung nach Anspruch 5, **dadurch gekennzeichnet, dass** als Begleitstoff einer oder mehrerer der Stoffe Eisenoxid, Siliziumoxid, Calciumoxid und Magnesiumoxid eingesetzt wird.

7. Verwendung nach einem der Ansprüche 1 bis 6, **dadurch gekennzeichnet, dass** die synthetische Titanverbindung in einem Anteil von 0,5 bis 30 Gew.-% (gerechnet ohne eventuelle Begleitstoffe) den Rohstoffen zugesetzt wird (bezogen auf das Gesamtgewicht aller eingesetzten Rohstoffe).

8. Verwendung nach einem der Anspruche 1 bis 7, **dadurch gekennzeichnet, dass** die synthetische Titanverbindung eine bevorzugte Korngröße d₅₀ von 0,001 µm bis 2000 µm hat.

9. Verwendung nach einem der Ansprüche 1 bis 8, **dadurch gekennzeichnet, dass** als Begleitstoff Eisenoxid zugegeben wird, wobei das Eisen unterschiedliche Oxidationsstufen aufweisen kann und die Zugabemenge des Eisenoxides bis zu 70 Gew.% der Zugabemenge der synthetischen Titanverbindung beträgt.

10. Verwendung nach Anspruch 9, **Dadurch gekennzeichnet, dass** die Zugabemenge des Eisenoxides 5 bis 50 Gew.% der Zugabemenge der synthetischen Titanverbindung beträgt.

## Claims

1. Use of carbon or graphite electrodes in which a carbon bearer is mixed with a binder containing hydrocarbons and the mixture is subjected to a coking and/or graphitization process, wherein one or more synthetic titanium compounds is/are additionally introduced into the raw materials in electric or arc furnaces.

2. Use according to claim 1, **characterized in that** the synthetic titanium compound is added to the carbon bearer or the binder or the mixture of carbon bearer and binder.

3. Use according to claim 1, **characterized in that** the synthetic titanium compound is added to tar pitch, and the tar pitch to which the synthetic titanium compound has been added is then used in a known manner to impregnate the electrodes.

4. Use according to one of claims 1 to 3, **characterized in that** the synthetic titanium compound contains TiO₂ or consists of TiO₂.

5. Use according to one of claims 1 to 4, **characterized in that** the synthetic titanium compound is used in a mixture with other substances (companion substances).

6. Use according to claim 5, **characterized in that** one or more of the substances iron oxide, silicon oxide, calcium oxide and magnesium oxide is/are used as the companion substance.

7. Use according to one of claims 1 to 6, **characterized in that** the synthetic titanium compound is added to the raw materials in a proportion of 0.5 to 30 wt.% (calculated without any companion substances and based on the total weight of all the raw materials used).

8. Use according to one of claims 1 to 7, **characterized in that** the synthetic titanium compound has a preferred particle size d₅₀ of 0.001 µm to 2,000 µm.

9. Use according to one of claims 1 to 8, **characterized in that** iron oxide is added as the companion substance, it being possible for the iron to be in different oxidation states, and the amount of iron oxide added being up to 70 wt.% of the amount of synthetic titanium compound added.

10. Use according to claim 9, **characterized in that** the amount of iron oxide added is 5 to 50 wt.% of the amount of synthetic titanium compound added.

## Revendications

1. Utilisation, dans des fours électriques ou des fours à arc, d'électrodes en carbone ou en graphite, pour lesquelles un matériau d'apport de carbone a été mélangé avec un liant contenant un hydrocarbure et le mélange a été soumis à un processus de cokéfaction et/ou de graphitisation, un ou plusieurs composé(s) synthétique(s) du titane ayant été ajouté(s) aux matières premières.

2. Utilisation conforme à la revendication 1, **caractérisée en ce que** le composé synthétique du titane a été ajouté au matériau d'apport de carbone, au liant, ou au mélange de matériau d'apport de carbone et de liant.

3. Utilisation conforme à la revendication 1, **caractérisée en ce que** le composé synthétique du titane a été ajouté à du brai et le brai additionné de composé synthétique du titane a ensuite été utilisé, de manière connue, pour imprégner les électrodes.

4. Utilisation conforme à l'une des revendications 1 à 3, **caractérisée en ce que** le composé synthétique du titane contenait du dioxyde de titane ou était constitué de dioxyde de titane.

5. Utilisation conforme à l'une des revendications 1 à 4, **caractérisée en ce que** le composé synthétique du titane a été ajouté à l'état de mélange avec d'autres matières (impuretés).

6. Utilisation conforme à la revendication 5, **caractérisée en ce qu'**ont été introduites, en tant qu'impuretés, une ou plusieurs des matières suivantes : oxyde de fer, oxyde de silicium, oxyde de calcium et oxyde de magnésium.

7. Utilisation conforme à l'une des revendications 1 à 6, **caractérisée en ce que** le composé synthétique du titane a été ajouté aux matières premières en une proportion, calculée sans tenir compte des éventuelles impuretés, de 0,5 à 30 %, en poids rapporté au poids total de toutes les matières premières utilisées.

8. Utilisation conforme à l'une des revendications 1 à 7, **caractérisée en ce que** le composé synthétique du titane présentait de préférence une taille de grains d₅₀ de 0,001 µm à 2000 µm.

9. Utilisation conforme à l'une des revendications 1 à 8, **caractérisée en ce qu'**a été introduit, en tant qu'impureté, de l'oxyde de fer où le fer pouvait se trouver à différents degrés d'oxydation, et la quantité d'oxyde de fer ajoutée représentait, en poids, jusqu'à 70 % de la quantité de composé synthétique du titane ajoutée.

10. Utilisation conforme à la revendication 9, **caractérisée en ce que** la quantité d'oxyde de fer ajoutée représentait, en poids, de 5 à 50 % de la quantité de composé synthétique du titane ajoutée.
